# EUROPÄISCHE PATENTSCHRIFT

(11) **EP 0 350 732 B1**
(45) Veröffentlichungstag und Bekanntmachung des Hinweises auf die Patenterteilung: **27.12.1995**
(21) Anmeldenummer: 89111942.2
(22) Anmeldetag: 30.06.1989
(51) Int. Cl.: D02G 3/36, B29C 61/06

(54) **Langgestreckter Formstrang**
Drawn formed tow
Câble formé, élité

(30) Priorität: 13.07.1988 DE 3823649; 21.09.1988 DE 3831996; 01.10.1988 DE 3833415
(43) Veröffentlichungstag der Anmeldung: 17.01.1990
(60) Teilanmeldung: 93112705.4
(73) Patentinhaber: kabelmetal electro GmbH, 30002 Hannover (DE)
(72) Erfinder: Marx, Karl-Heinz, D-3008 Garbsen 9 (DE); Grajewski, Franz, Dr.-Ing., D-3067 Lindhorst (DE)

(56) Entgegenhaltungen:
- EP-A- 0 116 390
- EP-A- 0 273 224
- GB-A- 2 063 947
- GB-A- 2 129 461
- US-A- 4 164 837

## Beschreibung

Die Erfindung betrifft ein Verfahren zur Herstellung eines langgestreckten Formstranges aus einem Polymeren zur Herstellung von wärmerückstellbaren Gegenständen, bei welchem zunächst ein Formstrang aus einem Polymeren durch Extrusion hergestellt, sodann in kontinuierlicher Arbeitsweise auf eine Temperatur oberhalb des Kristallitschmelzpunktes des Polymeren erwärmt, gereckt und im gereckten Zustand abgekühlt wird, wie dies beispielsweise aus der EP-A- 0 116 390 bekannt ist.

Aus der EP 0115905 A2 ist ein wärmerückstellbarer Gegenstand bekannt, der aus einem Gewebe besteht, welches aus wärmerückstellbaren und nicht wärmerückstellbaren Fäden aufgebaut ist. Die wärmerückstellbaren Fäden werden extrudiert, vernetzt, über den Kristallitschmelzpunkt des vernetzten Polymeren erwärmt, gereckt und im gereckten Zustand abgekühlt.

Die wärmerückstellbaren Fäden bestehen aus einem Polymeren, wogegen die nicht wärmerückstellbaren Fäden aus Polyester bzw. Glas hergestellt sind.

Nachteilig bei dem bekannten Gewebe ist, daß die Zugfestigkeit des wärmerückstellbaren Fadens bei Schrumpftemperatur, d. h. bei 130 - 150° C äußerst gering ist und deshalb bei Überlastung eines Fadens dieser abreißen kann.

Aus der EP-A-0116390 ist ein Verfahren zum Umhüllen von geformten Gegenständen bekannt, bei welchem um den Gegenstand ein rückstellbares Gewebe herumgelegt wird und auf den Gegenstand heruntergeschrumpft wird. Um sich den unterschiedlichen Formen des Gegenstandes besser anpassen zu können, besitzt das Gewebe Bereiche mit unterschiedlichen Schrumpfraten. Das Gewebe besteht aus in Schrumpfrichtung verlaufenden rückstellbaren Fäden und quer dazu verlaufenden Fäden aus einem bei Schrumpftemperatur hochfestem Material, wie z.B. Glasseide. Die Glasseidefäden sind mit den schrumpfenden Fäden verwoben. Das so hergestellte Gewebe ist in einer Kunststoffmatrix eingebettet. Ein solcher Gegenstand ist nur quer zur Schrumpfrichtung verstärkt, bei Schrumpftemperatur hochzugfeste Fäden in Schrumpfrichtung sind nicht vorgesehen. Ebenfalls ist in dieser Druckschrift ein Verfahren zur Herstellung wärmeschrumpfender Gegenstände offenbart, bei welchem ein vernetzter Gegenstand erwärmt, gereckt und abgekühlt wird.

Der vorliegenden Erfindung liegt die Aufgabe zugrunde, ein Verfahren zur Herstellung eines Formstranges zur Herstellung von wärmerückstellbaren Gegenständen zu finden, mit dem wärmerückstellbare Gegenstände hergestellt werden können, die eine wesentlich höhere Reißfestigkeit aufweisen.

Diese Aufgabe wird dadurch gelöst, daß auf den Formstrang vor dem Recken eine Umwicklung, Umspinnung, Umflechtung aus mindestens einem Strang aus bei Erweichungstemperatur des Formstranges hochfestem Werkstoff aufgewickelt wird, wobei der Strang oder die Stränge unter einem Winkel von kleiner als 90° aber größer als 0° zur Längsachse des Formstranges verläuft bzw. verlaufen.

Die als Umwicklung, Umspinnung, Umflechtung o.ä. ausgebildete Verstärkungsschicht hat dabei die vorteilhafte Eigenschaft, daß sie sich ohne Schwierigkeiten den infolge Reckung oder Zusammenziehung auftretenden Querschnittsänderungen des Formstranges anpassen kann. Der Querschnitt des Formstranges kann nahezu beliebig sein. So kann es für manche Anwendungsfälle von Vorteil sein, einen im Querschnitt kreisrunden oder ovalen Formstrang zu verwenden, wogegen es für andere Anwendungsfälle vorteilhaft sein kann, einen vom "runden" Querschnitt abweichenden Querschnitt, wie z.B. einen rechteckigen, dreieckigen, trapezförmigen Querschnitt zu wählen.

Als Material für die Verstärkungsschicht kommen vorteilhafterweise Fäden oder verzwirnte Stränge oder Bänder aus z. B. Baumwolle, Metall, Glas, Keramik u. a., auch in Kombination miteinander, in Betracht. Besonders geeignet sind Stränge, Fäden oder Bänder aus hochtemperaturbeständigem Kunststoff, wie Polyester, Polyamid etc..

Mit besonderem Vorteil ist auf den Formstrang ein Faden oder Band wendelartig angebracht. Eine solche Umwicklung läßt sich mit sehr hoher Geschwindigkeit herstellen. Die Umwicklung kann aus mehreren mit gleicher Schlaglänge parallel zueinander verlaufenden Bändern oder Fäden bestehen. Auch eine Umwicklung aus mehreren Fäden oder Bändern mit entgegengesetzter Schlagrichtung ist von Vorteil, wie z.B. ein Geflecht.

Zweckmäßigerweise wird der Formstrang vor dem Umwickeln, Umspinnen, Umflechten vernetzt. Durch die Vernetzung wird, wie an sich bekannt, die Fähigkeit, sich bei Erwärmung zurückzustellen, verbessert.

Unterhalb der Verstärkungsschicht wird zweckmäßigerweise eine Schicht aus einem thermoplastischen Polymer angeordnet, auf welcher die Verstärkungsschicht aufliegt. Die thermoplastische Schicht wird gleichzeitig mit dem Kern aus vernetzbarem Polymer durch Koextrusion erzeugt. Die thermoplastische Schicht hat den Vorteil, daß der Formstrang durch Schmelzschweißen mit Teilen aus einem Thermoplasten verbunden werden kann. So können z.B. nebeneinanderverlaufende Formstränge durch punktuelles Verschweißen zu einem Netz verarbeitet werden.

Bei der Herstellung des Formstranges wird zunächst ein Formstrang aus einem Polymeren durch Extrusion hergestellt, darauf vernetzt, sodann in kontinuierlicher Arbeitsweise auf eine Temperatur oberhalb des Kristallitschmelzpunktes des Polymeren erwärmt, bei dieser Temperatur gereckt, im gereckten Zustand abgekühlt. Vor oder nach dem Recken wird die Umwicklung, Umspinnung, Umflechtung o.ä. aufgebracht. Wird die Verstärkungsschicht im gereckten Zustand auf den Formstrang aufgebracht, ist ein kleiner Steigungswinkel der Fäden erforderlich. Wird die Verstärkungsschicht vor dem Recken aufgebracht, auch diese Vorgehensweise liegt im Rahmen der Erfindung, ist ein großer Steigungswinkel erforderlich. Unter Steigungswinkel soll der Winkel zwischen der Längsachse und dem Faden bzw. Band verstanden werden. Vielfach wird in der Kabeltechnik auch von Schlaglänge gesprochen. Hierbei handelt es sich um den längsaxialen Abstand zwischen zwei Wiederkehrpunkten. Eine große Schlaglänge entspricht also einem kleinen Steigungswinkel, wogegen eine kleine Schlaglänge einem großen Steigungswinkel entspricht.

Der Formstrang, bzw. ein nach dem Verfahren gemäß der Erfindung hergestellter Formstrang läßt sich nach einem weiteren Gedanken der Erfindung zu einem wärmeschrumpfenden Band herstellen, welches beispielsweise zum Abdecken einer Verbindungsstelle von elektrischen Kabeln oder Leitungsrohren Verwendung finden kann. Ein solches Band besteht aus einer Vielzahl von parallel zueinander verlaufenden Formsträngen, die in einer Schicht aus einem thermoplastischen Polymer eingebettet sind.

Die Einbettungsschicht ist zweckmäßigerweise eine extrudierte Schicht. Es besteht jedoch auch die Möglichkeit, daß die in einer Ebene liegenden Formstränge beidseitig mit einem Band aus einem thermoplastischen Polymer kaschiert sind. Die Einbettungsschicht schafft ein flächenhaftes Gebilde, in welchem die wärmerückstellfähigen Formstränge integriert sind. Nach dem Aufbringen der thermoplastischen Schicht durch Extrudieren oder Kaschieren kann diese Schicht noch vernetzt werden.

Durch die Verstärkungsschicht der Formstränge hat ein solches Band in Schrumpfrichtung eine ausreichend hohe Reißfestigkeit. Um auch eine hohe Reißfestigkeit des Bandes quer zur Schrumpfrichtung zu erzielen, können sogenannte Kettfäden um die Formstränge herumgelegt werden.

Eine andere vorteilhafte Lösung dieses Problems besteht darin, daß zumindest in einem der Bänder, mit denen die Formstränge kaschiert sind, Fäden aus bei Schrumpftemperatur zugfestem Werkstoff vorgesehen sind. Diese Fäden erstrecken sich über die gesamte Breite des Bandes und bestehen aus ähnlichem Material wie das Material der Verstärkungsschicht der Formstränge.

Ein solches Band wird nach einem weiteren Gedanken der Erfindung in der Weise hergestellt, daß aus einer Vielzahl von in einer Ebene nebeneinander verlaufenden Formsträngen mit einem oder mehreren Kettfäden eine Matte herstellt, diese Matte mit einem thermoplastischen Polymer beidseitig beschichtet und abschließend die beschichtete Matte erwärmt und gereckt und im gereckten Zustand abgekühlt wird. Die Formstränge sind dabei ungereckt, d.h. das Band wird nach der Beschichtung gereckt. Die Beschichtung kann durch Extrusion oder durch Kaschieren erfolgen.

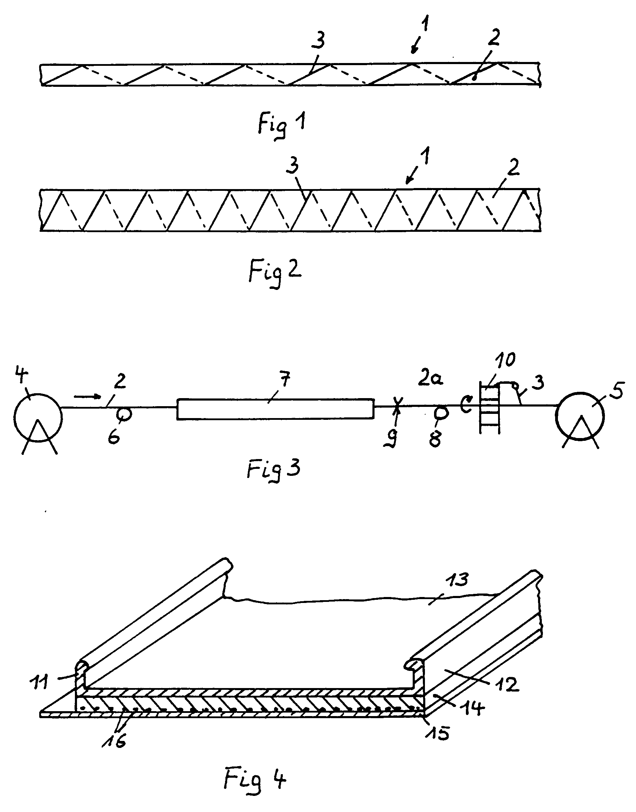

Die Erfindung ist an Hand der in den Figuren 1 bis 11 schematisch dargestellten Ausführungsbeispiele näher erläutert.
Die Figur 1 zeigt einen Formstrang 1 gemäß der Lehre der Erfindung, der sich im gereckten Zustand befindet. Der Formstrang 1 besteht aus einem Kern 2 aus einem thermoplastischen oder vernetzten Kunststoff, vorzugsweise Polyethylen, welches mit Silanen gepfropft ist. Auf den Kern 2 ist ein Faden oder Band 3 wendelartig aufgewickelt. Der Faden bzw. das Band 3 besteht aus einem Werkstoff, welcher bei Schrumpftemperatur, d. h. bei ca. 130 bis 150° C eine wesentlich höhere Zugfestigkeit als der Werkstoff des Kerns 2 aufweist. Vorteilhafte Beispiele für das Material des Fadens 3 sind hochfeste Kunststoffe, wie z.B. Polyester, Polyamid, oder Baumwolle, Metalle, Keramik, Glas u.ä.. Der Faden bzw. das Band 3 ist zweckmäßigerweise aus miteinander verseilten, verzwirnten, verflochtenen oder anderweitig miteinander zusammengebrachten dünnen Einzelfäden aufgebaut. Dadurch kann der Faden oder das Band 3 aus mehreren der o.g. Werkstoffe aufgebaut sein.

Auch der Kern 2 kann aus Einzelfäden aufgebaut sein, die miteinander verseilt, verzwirnt, verflochten oder anderweitig kombiniert sein können. So ist es beispielsweise denkbar, Einzelfäden aus vernetzten Polymeren mit Einzelfäden aus gummielastischem Werkstoff, wie z. B. natürliche oder künstliche Kautschuke zu kombinieren. Auch eine Kombination von Einzelfäden aus einem vernetzten Polymer und nicht schrumpfbaren Einzelfäden ist denkbar. Wesentlich für diese Kombination ist, daß eine Vereinigung der Einzelfäden mit einer bestimmten Schlaglänge vorliegt, die sich bei einer Reckung bzw. Schrumpfung des Formstranges 2 vergrößern bzw. verringern kann. Der Querschnitt des Formstranges 2 bzw. der ihn ggfs. bildenden Einzelfäden kann beliebig sein, z. B. rund, oval, rechteck-, dreieck- oder trapezförmig.

Wenn der Kern 2 aus einem vernetzten Polyethylen besteht, kann zwischen dem Kern 2 und dem Faden oder Band 3 eine vorzugsweise beim Extrudieren des Kernes 2 koextrudierte nicht dargestellte Schicht aus einem anderen Werkstoff vorgesehen sein. Diese Schicht sollte aus einem nicht vernetzten Polyolefin, Polyamid, Polytetrafluorethylen bestehen, um den Formstrang 1 flammbeständig, säurefest etc. zu machen. Eine Schicht aus nicht vernetztem Polyolefin würde bei der Weiterverarbeitung Vorteile bringen, da eine solche Schicht die Möglichkeit eröffnet, Formstränge miteinander oder mit Kunststoffbändern zu verschweißen, z. B. zu kaschieren.

Die Figur 2 Zeigt den Formstrang im geschrumpften, bzw. noch nicht gereckten Zustand. Es ist deutlich erkennbar, daß der Querschnitt des Kernes 2 infolge der Verkürzung der Länge des Kernes 2 zunimmt. Die Steigung des Fadens bzw. Bandes 3 nimmt dabei ab.

Die Herstellung eines solchen Formstranges soll anhand der Figur 3 näher erläutert werden.

Von einer Vorratsspule 4 wird der Kern 2 kontinuierlich abgezogen und nach der nachfolgend beschriebenen Behandlung auf eine Vorratsspule 5 aufgewickelt. Der Kern 2 kann wie oben aus einem oder mehreren Fäden aufgebaut sein. Der Kern 2 wird zunächst um eine Trommel oder Walze 6 mit mindestens einer Windung herumgeführt und gelangt dann in die Reckeinrichtung 7, in welcher er zunächst auf eine Temperatur oberhalb des Kristallitschmelzpunktes erwärmt und abschließend abgekühlt wird. Im Bereich der Aufheizung wird der Kern 2 gereckt. Hierzu dient eine weitere Trommel oder Walze 8, um welche der gereckte Kern 2a in mindestens einer Windung herumgeführt ist. Die Trommel oder Walze 8 sorgt nun dafür, daß der gereckte Kern 2a mit einer höheren Geschwindigkeit aus der Reckeinrichtung 7 austritt als er eingefahren wird. Durch den Unterschied zwischen Eintritts- und Austrittsgeschwindigkeit wird der Kern 2 gereckt. Bei gleichem Durchmesser der Trommeln 6 und 8 muß die Trommel 8 mit höherer Geschwindigkeit angetrieben werden. Auch unterschiedliche Trommeldurchmesser sind möglich. Der Grad der Reckung wird durch Messung des Durchmessers des gereckten Kernes 2a bei 9 ermittelt und mit dem Durchmesser des ungereckten Kerns 2 verglichen. Je nach dem Ergebnis des Vergleichs wird die Rotationsgeschwindigkeit der Trommel 8 geregelt.

Der gereckte Kern 2a wird z.B. mittels eines Kopsenspinners 10 mit dem zugfesten Faden oder Band 3 versehen und auf die Vorratsspule 5 aufgewickelt.

Es besteht jedoch auch die Möglichkeit, den Faden oder das Band 3 vor dem Recken aufzubringen. Beim Recken verändert sich dann die Steigung bzw. Schlaglänge des Fadens oder Bandes 3.

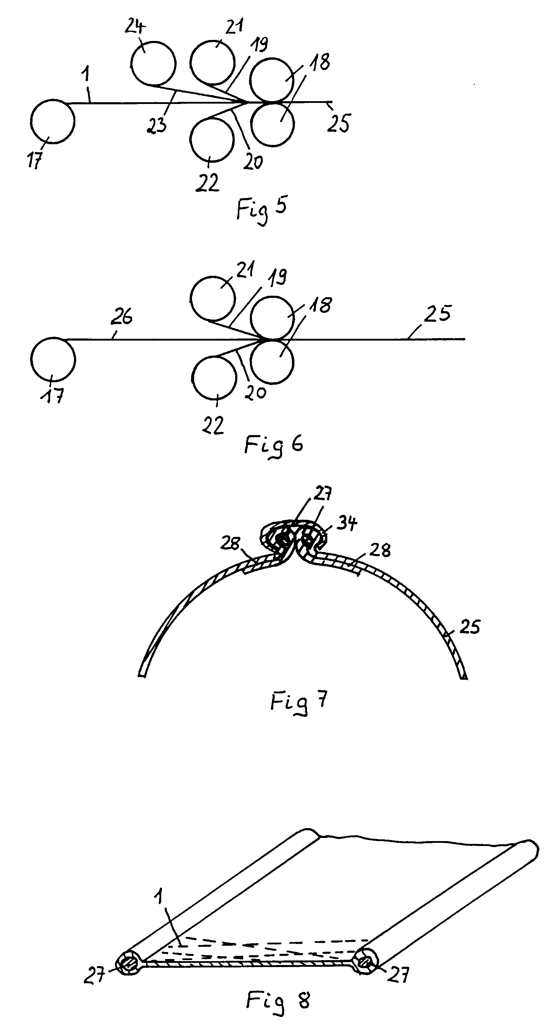

Die Figuren 4, 7 und 8 zeigen Gegenstände, die unter Zuhilfenahme eines Formstranges, wie es in den Figuren 1 und 2 dargestellt ist, hergestellt sind, die Figuren 5 und 6 verschiedene Herstellungsverfahren.

Figur 4 zeigt eine Manschette, die zum Umwickeln von z.B. Verbindungen von Kabeln oder Rohren geeignet ist. Die Manschette besitzt zwei Längsstege 11 und 12, über welche nach dem Herumformen um die Verbindungsstelle in nicht dargestellter Weise eine Schiene geschoben wird. Die Stege 11 und 12 dienen darüberhinaus als Kraftangriffspunkte beim Reckvorgang. Die hergestellte Manschette ist mehrschichtig ausgebildet, und zwar besteht sie aus der Schicht 13, der Schicht 14 und der Schicht 15, die durch Kaschieren oder Koextrusion zu einer einheitlichen Manschette verbunden werden. Die Schicht 13 mit den Längsstegen 11 und 12 besteht aus einem thermoplastischen Polymer, z.B. Polyethylen. Die Schicht 14 ist im wesentlichen aus einer nicht dargestellten Matte aufgebaut, die sich aus einzelnen Formsträngen gemäß Figur 1 bzw. 2 zusammensetzt. Die Formstränge verlaufen senkrecht zur Richtung der Längsstege 11 und 12. Die Formstränge sind vorteilhafterweise durch einen oder mehrere quer zur Längsrichtung der Formstränge verlaufende, die einzelnen Formstränge umschlingende Fäden zu einer Matte vereinigt. Eine andere Ausgestaltungsform einer Matte besteht darin, daß ein Formstrang mäanderartig verlegt und in Richtung des Mäanderverlaufes mit einer Schicht aus einem thermoplastischen Kunststoff beschichtet ist. In Richtung des Mäanders verlaufende zugfeste Fäden 16 erhöhen die Stabilität der Manschette und ihre Reißfestigkeit. Die Schicht 15 besteht ebenfalls aus einem thermoplastischen Polymer, z.B. Polyethylen, die in nicht dargestellter Weise parallel zu den Stegen 11 und 12 verlaufende zugfeste Fäden aufweisen kann.

Neben dem Kaschieren der Schichten 13, 14 und 15 besteht auch die Möglichkeit, den Schichtaufbau durch Koextrusion der drei Schichten herzustellen. In diesem Fall ist es vorteilhaft, die Schicht 14 allseitig mit einem thermoplastischen Kunststoff zu umhüllen, d.h. die in der Figur 4 dargestellten Schichten 13 und 15 sind durch eine nicht dargestellte Randbeschichtung parallel zu den Stegen 11 und 12 verbunden. Der gesamte Randbereich in der Nähe der Stege wird dann zweckmäßigerweise vernetzt, z. B. durch Strahlenvernetzung.

Falls der Formstrang noch nicht gereckt ist, kann der durch Kaschieren oder Koextrusion hergestellte Manschettenrohling gereckt werden.

Nach Figur 5 wird eine Vielzahl von Formsträngen, wie sie in Figur 1 oder 2 dargestellt sind, parallel zueinander und in einer Ebene verlaufend von Vorratsspulen 17 abgezogen. Der Deutlichkeit halber sind nur ein Formstrang 1 und eine Vorratsspule 17 dargestellt. Die Formstränge 1 werden in einem Walzenpaar 18 beidseitig mit je einem Band 19 und 20, die von Vorratsspulen 21 und 22 abgezogen werden, kaschiert. Zwischen dem Band 19 und den Formsträngen 1 läuft noch ein Gewebe 23 ein, das von einer Vorratsspule 24 abgezogen wird. Die für diese Vorgehensweise verwendeten Formstränge 1 sind bereits gereckt, so daß das kaschierte Band 25 wärmerückstellbar ist.

Ein ähnliches Verfahren zeigt Figur 6. Von der Vorratsspule 17 wird eine Matte 26 abgezogen, die aus in Fertigungsrichtung verlaufenden vorgereckten Formsträngen 1 besteht, die durch eine Vielzahl von querverlaufenden mit den Formsträngen verkettelten zugfesten Fäden zu der Matte 26 vereinigt sind. Diese Matte 26 wird wie bei Figur 5 beidseitig mit Kunststoffbändern 19 und 20 kaschiert.

Die Bänder 25 können in kontinuierlicher Arbeitsweise in nahezu unendlichen Längen hergestellt werden.

Wird auf das hochfeste Gewebe 23 gemäß Figur 5 bzw. die zugfesten Fäden bei Figur 6 verzichtet, kann das jeweilige Verfahren auch dahingehend abgeändert werden, daß ungereckte Formstränge verwendet werden und der Gegenstand nach dem Kaschieren in seiner Gesamtheit gereckt wird.

Zur Herstellung einer Umhüllung (siehe Figur 7) für eine Kabel- oder Rohrleitungsverbindung wird eine bestimmte Länge von dem Band 25 abgetrennt. Als Verschlußelement für eine solche Umhüllung dient eine C-förmige Verschlußschiene 34, die die Enden des Bandes 25 zusammenhält. Die Enden des Bandes 25 umschlingen jeweils einen flexiblen Stab 27 und sind wie bei 28 gezeigt mit dem Band 25 verklebt oder verschweißt.

Bei dem Ausführungsbeispiel nach Figur 8 wird um die Stäbe 27 ein Formstrang 1 nach Figur 1 nach Art einer Wendel mit einer vorbestimmten Steigung herumgesponnen. Das so entstandene Gebilde kann dann mit einer thermoplastischen Schicht, z.B. durch Kaschieren oder Extrusion umhüllt werden. Der Formstrang 1 kann dabei in gerecktem Zustand auf die Stäbe 27 aufgewickelt werden, so daß nach der Kunststoffbeschichtung die Umhüllung fertig ist. Es kann jedoch auch ein ungereckter Formstrang 1 um die Stäbe 27 herumgewickelt werden, das Gebilde mit Kunststoff beschichtet und anschließend gereckt werden.

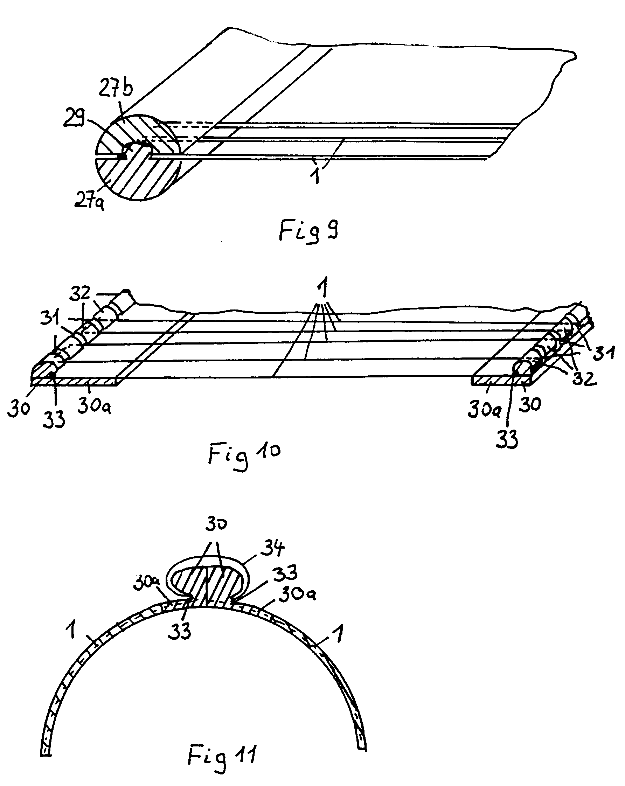

Bei dem Ausführungsbeispiel nach Figur 9 wird ein gereckter oder ungereckter Formstrang 1 zwischen zwei Stabhälften 27 a und 27 b festgelegt. Der Formstrang 1 wird um Noppen 29 herumgelegt und dann um einen entsprechenden Noppen 29 an einer parallel zur Stabhälfte 27 a verlaufenden nicht mehr dargestellten Stabhälfte herumgelegt. Nachdem der Formstrang 1 um alle Noppen 29 herumgelegt ist, wird die Stabhälfte 27 b auf der Stabhälfte 27 a durch Aufschieben, Aufclippen, Verschrauben oder anderweitige Befestigungsverfahren festgelegt. Auch dieses Gebilde kann durch Extrusion oder Kaschieren mit Kunststoff vor oder nach dem Recken des Formstranges 1 beschichtet werden. Der Vorteil dieser Ausführungsform besteht darin, daß die einzelnen Windungen des Formstranges 1 in einer Ebene liegen.

Der gleiche Vorteil wird bei der Ausführungsform nach Figur 10 erzielt. Die Stäbe 30 weisen etwa einen halbkreisförmigen Querschnitt mit einem Ansatz 30a auf. In den Stäben 30 befinden sich eine Vielzahl von Nuten 31, wodurch Blöcke 32 gebildet werden, um welche der Formstrang 1 herumgelegt ist. In den Blöcken 32 ist eine in Längsrichtung verlaufende Nut 33 vorgesehen, in welcher eine C-förmige Schiene 34 mit ihren Kanten geführt ist (siehe Figur 11).

## Patentansprüche

1. Verfahren zur Herstellung eines langgestreckten Formstranges (1,2,3) aus einem Polymeren zur Herstellung von wärmerückstellbaren Gegenständen, bei welchem zunächst ein Formstrang aus einem Polymeren durch Extrusion hergestellt, sodann in kontinuierlicher Arbeitsweise auf eine Temperatur oberhalb des Kristallitschmelzpunktes des Polymeren erwärmt, gereckt und im gereckten Zustand abgekühlt wird, dadurch gekennzeichnet, daß auf den Formstrang (1,2) vor dem Recken eine Umwicklung, Umspinnung, Umflechtung aus mindestens einem Strang (3) aus bei Erweichungstemperatur des Formstranges (2) hochfestem Werkstoff aufgewickelt wird, wobei der Strang (3) oder die Stränge (3) unter einem Winkel α von kleiner als 90°, aber größer als 0° zur Längsachse des Formstranges (2) verläuft beziehungsweise verlaufen.

2. Verfahren nach Anspruch 1, dadurch gekennzeichnet, daß ein Strang (3) aus hochtemperaturbeständigem Kunststoff wie Polyester, Polyamid aufgebracht wird.

3. Verfahren nach Anspruch 1 oder 2, dadurch gekennzeichnet, daß auf den Formstrang (1,2) ein Faden oder Band (3) wendelartig aufgebracht wird.

4. Verfahren nach einem der Ansprüche 1 bis 3, dadurch gekennzeichnet, daß der Formstrang (2) vor dem Umwickeln, Umspinnen, Umflechten vernetzt wird.

5. Verfahren nach Anspruch 4, dadurch gekennzeichnet, daß unterhalb der Umwicklung, Umspinnung, Umflechtung eine dünne Schicht aus einem thermoplastischen Kunststoff angeordnet wird.

6. Verfahren zur Herstellung eines wärmeschrumpfenden Bandes, bei dem auf einen Formstrang (2) aus einem vernetzten Polymer eine Umwicklung, Umspinnung, Umflechtung aus mindestens einem Strang (3) aus bei Erweichungstemperatur des Formstranges (2) hochfestem Werkstoff aufgewickelt wird, wobei der Strang (3) unter einem Winkel α von kleiner als 90°, aber größer als 0° zur Längsachse des Formstranges (2) verläuft, eine Vielzahl von derartigen Formsträngen (2) parallel in einen Extruder eingeführt und mit einer Schicht aus einem thermoplastischen Polymer umhüllt werden, so daß ein im Querschnitt im wesentlichen rechteckförmiges Band entsteht, das Band über den Kristallitschmelzpunkt des vernetzten Polymeren erwärmt, im erwärmten Zustand gereckt und im gereckten Zustand abgekühlt wird.

7. Verfahren zur Herstellung eines wärmeschrumpfenden Bandes bei dem auf einen Formstrang (2) aus einem vernetzten Polymer eine Umwicklung, Umspinnung, Umflechtung aus mindestens einem Strang (3) aus bei Erweichungstemperatur des Formstranges (2) hochfestem Werkstoff aufgewickelt wird, wobei der Strang (3) unter einem Winkel α von kleiner als 90°, aber größer als 0° zur Längsachse des Formstranges (2) verläuft, aus einer Vielzahl derartiger in einer Ebene nebeneinander verlaufenden Formsträngen mit einem Kettfaden eine Matte hergestellt, diese Matte mit einem thermoplastischen Polymer beidseitig beschichtet, die beschichtete Matte erwärmt, im erwärmten Zustand gereckt und im gereckten Zustand abgekühlt wird.

## Claims

1. A process for producing an elongate shaped strand (1, 2, 3) of a polymer for producing heat-recoverable articles wherein initially a shaped strand is produced from a polymer by extrusion, then continuously heated to a temperature above the crystallite melting point of the polymer, stretched and cooled in the stretched state, characterized in that prior to the stretching the shaped strand (1, 2) has wound on to it an overwinding, overspinning, overbraiding made of at least one strand (3) of a material which has high strength at the softening temperature of the shaped strand (2), the or each strand (3) extending at an angle α of less than 90° but greater than 0° relative to the longitudinal axis of the shaped strand (2).

2. A process according to claim 1 characterized in that a strand (3) of high temperature resistant plastic such as polyester, polyamide is applied.

3. A process as claimed in claim 1 or 2, characterized in that the shaped strand (1, 2) has applied to it a thread or band (3) in helical fashion.

4. A process according to any one of claims 1 to 3, characterized in that the shaped strand (2) is crosslinked prior to the overwinding, overspinning, overbraiding.

5. A process according to claim 4, characterized in that a thin layer of a thermoplastic polymer is arranged underneath the overwinding, overspinning, overbraiding.

6. A process for producing a heat-shrinking band wherein a shaped strand (2) of crosslinked polymer has wound on to it an overwinding, overspinning, overbraiding composed of at least one strand (3) of a material which has high strength at the softening temperature of the shaped strand (2), the strand (3) extending at an angle α of less than 90° but greater than 0° relative to the longitudinal axis of the shaped strand (2), a multiplicity of such shaped strands (2) are introduced in a parallel arrangement in an extruder and are overwrapped with a layer of a thermoplastic polymer to form a band which is essentially rectangular in cross-section, the band is heated to above the crystalline melting point of the crosslinked polymer, stretched in the heated state and cooled in the stretched state.

7. A process for producing a heat-shrinking band wherein a shaped strand (2) of crosslinked polymer has wound on to it an overwinding, overspinning, overbraiding composed of at least one strand (3) of a material which has high strength at the softening temperature of the shaped strand (2), the strand (3) extending at an angle α of less than 90° but greater than 0° relative to the longitudinal axis of the shaped strand (2), a mat is produced from a multiplicity of such shaped strands extending side by side in a plane using a warp thread, this mat is coated on both sides with a thermoplastic polymer, the coated mat is heated, stretched in the heated state and cooled in the stretched state.

## Revendications

1. Procédé de fabrication d'un boudin moulé (1,2,3), s'étendant en longueur, à partir d'un polymère pour fabrication d'objets rétractables à chaud, dans le cas duquel on fabrique tout d'abord par extrusion, à partir d'un polymère, un boudin moulé, puis on le chauffe, en un mode de travail continu, pour le porter à une température supérieure au point de fusion des cristallites du polymère, on l'étire et on le refroidit à l'état étiré, caractérisé par le fait qu'avant l'étirage, on enroule sur le boudin moulé (1,2) un enrubannage, un guipage, un tressage constitué d'au moins un élément continu (3) fait d'un matériau à haute résistance à la température de ramollissement du boudin moulé (2), l'élément continu (3) ou les éléments continus (3) étant orienté, ou orientés, sous un angle α inférieur à 90° mais supérieur à 0° par rapport à l'axe longitudinal du boudin moulé (2).

2. Procédé selon la revendication 1, caractérisé par le fait que l'on applique un élément continu (3) fait d'un matériau résistant à haute température comme polyester, polyamide.

3. Procédé selon la revendication 1 ou 2, caractérisé par le fait que sur le boudin moulé (1,2) on applique un fil ou un ruban (3) en spirale.

4. Procédé selon l'une des revendications 1 à 3, caractérisé par le fait qu'avant l'enrubannage, le guipage, le tressage, on fait réticuler le boudin moulé (2).

5. Procédé selon la revendication 4, caractérisé par le fait qu'en dessous de l'enrubannage, du guipage, du tressage, on dispose une couche mince de matériau thermoplastique.

6. Procédé de fabrication d'une bande rétractable à chaud, dans lequel, sur un boudin moulé (2) constitué d'un polymère réticulé, on enroule un enrubannage, un guipage, un tressage constitué d'au moins un élément continu (3) fait d'un matériau à haute résistance à la température de ramollissement du boudin moulé (2), l'élément continu (3) étant orienté sous un angle α inférieur à 90° mais supérieur à 0° par rapport à l'axe longitudinal du boudin moulé (2), dans lequel on introduit en parallèle dans une extrudeuse une pluralité de boudins moulés (2) de ce type et on les enveloppe d'une couche d'un polymère thermoplastique de façon qu'apparaisse une bande de section sensiblement rectangulaire, on chauffe la bande audessus du point de fusion des cristallites du polymère réticulé, on l'étire à l'état chaud et on la refroidit à l'état étiré.

7. Procédé de fabrication d'une bande rétractable à chaud, dans lequel sur un boudin moulé (2) constitué d'un polymère réticulé, on enroule un enrubannage, un guipage, un tressage constitué d'au moins un élément continu (3) fait d'un matériau à haute résistance à la température de ramollissement du boudin moulé (2), l'élément continu (3) étant orienté sous un angle α inférieur à 90° mais supérieur à 0° par rapport à l'axe longitudinal du boudin moulé (2), dans lequel, à partir d'une pluralité de boudins moulés de ce type, disposés l'un à côté de l'autre dans un plan, on fabrique avec un fil de chaîne un tapis, on revêt ce tapis, des deux côtés, d'un polymère thermoplastique, on chauffe le tapis revêtu, on l'étire à l'état chaud, et on le refroidit à l'état étiré.
